# DEMANDE DE BREVET EUROPEEN

(11) **EP 1 533 214 A1**
(43) Date de publication de la demande: **25.05.2005**
(21) Numéro de dépôt: 04292765.7
(22) Date de dépôt: 24.11.2004
(51) Int. Cl.: B62D 49/06, B62D 61/08

(54) **Porte-outils à trois roues**

(30) Priorité: 24.11.2003 FR 0313768
(71) Demandeur: Andelfinger, Georges, 68127 Niederhergheim (FR)
(72) Inventeur: Andelfinger, Georges, 68127 Niederhergheim (FR)
(74) Mandataire: Kaspar, Jean-Georges

(57) **Abrégé**

Le porte-outils (1) à trois roues (4, 5, 6) utilisable notamment en viticulture présente la forme de la lettre grecque r, l'extrémité avant de son châssis (2) étant reliée à un portique (3) perpendiculaire à ce dernier. Le portique (3) est formé de deux mâts (8, 9) reliés par une poutre (14), une première roue (4) étant agencée à l'extrémité avant du châssis (2) et en même temps à l'extrémité inférieure de l'un (8) des mâts, une deuxième (5) et troisième (6) roue est agencée à l'extrémité arrière du châssis (2) et à l'extrémité inférieure de l'autre mât (9) respectivement. Le dispositif de direction permet de rendre directrices soit les deux roues (4, 6) avant, soit les trois roues 4, 5, 6), soit de mettre les trois roues (4, 5, 6) en position crabe.

## Description

La présente invention porte sur un porte-outils à trois roues utilisable notamment en viticulture.

Ce genre de porte-outils ou porteur, communément dénommé « enjambeur », est mis en oeuvre pour réaliser, à l'aide d'outils appropriés, les différents travaux qu'exigent les soins qu'il convient d'apporter aux vignes, cela à certaines époques de l'année selon la nature des travaux. Ainsi, on attelle, généralement à l'avant du porte-outils, par exemple : une rogneuse pour effectuer les tailles latérales et l'écimage des ceps de vigne, nécessaires notamment pour la maîtrise de la végétation ; une prétailleuse pour la prétaille des sarments après la récolte du raisin, nécessaire pour la maîtrise du rendement de la récolte future ; une effeuilleuse pour assurer un bon mûrissement des grappes et éviter le pourrissement des baies ; un pulvérisateur pour le traitement contre les maladies, etc.

Sont très répandus les porte-outils à trois roues, ces roues formant, en projection sur le sol, un triangle isocèle dont la roue avant, seule directrice, constitue le sommet. En général, ces porte-outils enjambent deux rangs de vigne, la roue avant évoluant entre les deux rangs, lesquels sont enjambés par ladite roue avant et la roue arrière gauche ou arrière droite respectivement.

Les inconvénients de ce type connu de porte-outils sont multiples. On peut relever notamment :
- sa stabilité est médiocre, voire précaire lors de l'utilisation de certains outils et / ou dans certaines conditions d'utilisation ;
- du fait qu'une seule roue est directrice, à savoir la roue avant, et de son architecture, une grande zone de dégagement s'avère nécessaire pour sortir d'un rang et rentrer dans le rang suivant ;
- du fait de l'absence de correction de dévers, les travaux dans des parcelles en contre-pente sont difficiles et malaisés à effectuer, et parfois dangereux au point que la mise en oeuvre doit être abandonnée, les travaux devant alors être faits manuellement ;
- le tassement du sol provoqué par sa roue avant est d'autant plus important que, tout le poids de l'outil mis en oeuvre étant supporté par cette dernière, celle-ci est seule directrice ;
- la hauteur de passage sous châssis est limitée aux vignes basses et moyennes, de sorte que son applicabilité dans les régions à vignes hautes est exclue, sauf à surélever le châssis, et le centre de gravité, avec un risque élevé d'encourir des accidents et de provoquer des dommages de toute sorte, notamment lors de travaux en contre-pente.

Un but de la présente invention est de proposer un nouveau type de porte-outils à trois roues palliant les inconvénients exposés plus haut.

L'invention a pour objet un porte-outils à trois roues utilisable notamment en viticulture, présentant un poste de pilotage, un châssis et un dispositif de direction, et permettant de porter au moins un outil destiné à être mis en oeuvre pour effectuer au moins un travail défini, caractérisé en ce que sa conformation, vue en plan, présente sensiblement la forme de la lettre grecque Γ : une extrémité du châssis étant reliée à un portique perpendiculaire au châssis.

Les avantages d'un porte-outils à trois roues selon l'invention sont notamment, une stabilité exemplaire et un maintien de la trajectoire en toutes conditions de travail, un faible tassement du sol et une grande sécurité d'utilisation, quels que soient le type d'outil mis en oeuvre, la nature et le relief du sol.

Ces avantages ont pour corollaires une grande maniabilité, une polyvalence d'utilisation et une exploitation optimale des performances du ou des outils utilisés.

On va décrire maintenant, à titre d'exemple non limitatif, une forme d'exécution du porte-outils à trois roues selon l'invention, à l'aide des dessins annexés dans lesquels :
- la figure 1 est une vue schématique en perspective montrant l'architecture générale d'un porte-outils selon l'invention,
- la figure 2 est une vue schématique de gauche, en élévation latérale, d'un porte-outils selon l'invention.
- les figures 3 à 7 montrent, des vues partielles schématiques de dessus, illustrant différents modes d'utilisation de porte-outils selon l'invention.
- les figures 8, 9 et 10 sont des vues schématiques en élévation frontale de porte-outils selon l'invention, et
- la figure 11 est une vue schématique de dessus d'un porte-outils selon l'invention.

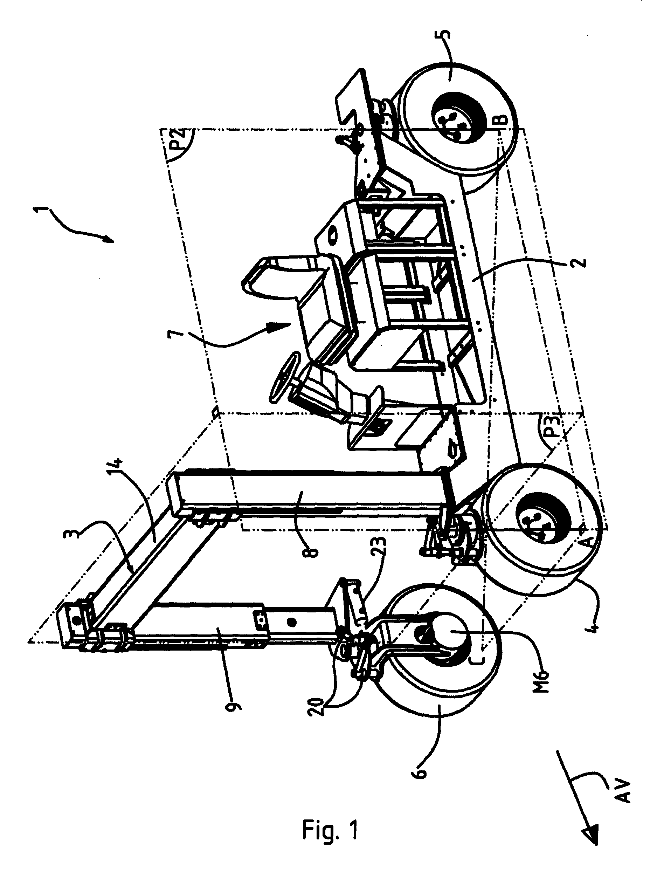

En référence aux figures 1, 2 et 11, le porte-outils 1 selon l'invention présente une architecture qui se distingue fondamentalement de l'architecture générale des porte-outils classiques, en ce que sa conformation en plan présente sensiblement la forme de la lettre grecque Γ.

Sur la figure 1 représentant schématiquement une vue en perspective simplifiée, dans laquelle les différents agrégats et dispositifs hydrauliques et électroniques ne sont pas représentés, le porte-outils selon l'invention comporte un châssis 2, de plan médian P2.

L'extrémité avant du châssis 2 est reliée à un portique 3 en forme de U inversé, de plan médian P3 ; les plans P2 et P3 étant perpendiculaires.

Le portique 3 comprend deux mâts 8, 9 reliés par une poutre ou traverse 14 ; l'extrémité inférieure du mât 8 étant reliée à l'extrémité avant du châssis 2.

La structure assemblée du châssis 2 et du portique 3 repose sur trois roues 4, 5, 6 agencées aux extrémités avant et arrière du châssis 2 et aux extrémités inférieures des mâts 8, 9 du portique 3.

Les centres des surfaces d'appui des roues sur le sol forment un triangle rectangle ABC, l'angle au sommet A étant droit ou, compte tenu de possibles particularités de construction de disposition et de fixation desdites roues, au moins approximativement droit.

Un poste 7 de pilotage, qui peut être protégé par une cabine non représentée, est aménagé au-dessus du châssis 2, entre les deux roues 4, 5, tandis que le corps du châssis 2, dont le fond s'étend à une faible distance au-dessus du sol, permet d'abriter la quasi totalité desdits différents agrégats et dispositifs hydrauliques et électroniques.

Le centre de gravité du porte-outils selon l'invention est bas et demeure proche du point de concours des médianes du triangle ABC, même en condition de travail, c'est-à-dire lorsqu'un outil, tel qu'une rogneuse ou une prétailleuse, est attelé au portique.

La sécurité et la stabilité sont amplifiées par le fait que ledit outil est attelé au portique 3 entre les roues avant 4 et 6 du porte-outils selon l'invention.

Le poids total en charge, c'est-à-dire le poids du porte-outils muni d'au moins un outil attelé sur le portique, reste réparti à parts à peu près égales sur chaque roue 4, 5, 6, l'influence de la différence de poids d'un outil à un autre s'avérant négligeable.

Le porte-outils selon l'invention peut enjamber soit un, soit deux rangs de vignes, sans que la hauteur des vignes, qui peut dépasser 2.50 m, ne constitue un handicap.

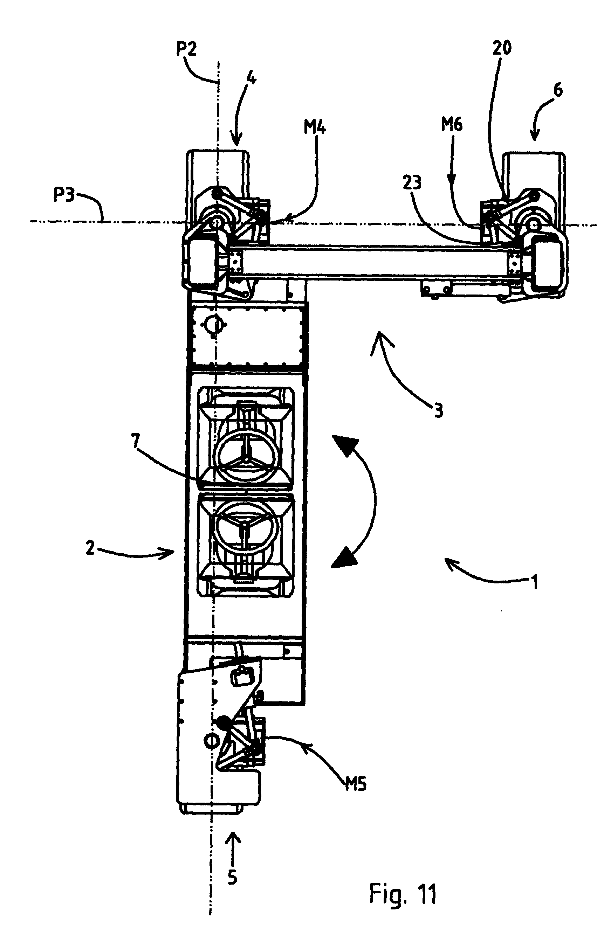

Chaque roue 4, 5 ou 6 est motrice et est entraînée par un moteur hydrostatique M4, M5, M6 (figure 11) et avantageusement équipée d'un dispositif anti-patinage.

Ce dispositif anti-patinage peut être permanent ou être déconnectable à volonté par l'opérateur, étant observé qu'il est avantageusement neutralisé automatiquement en vitesse route.

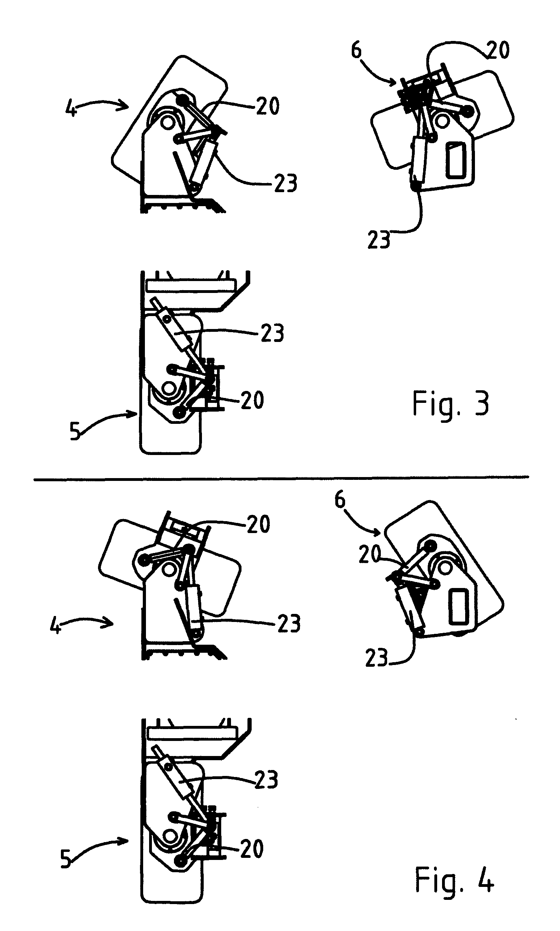

En référence aux figures 3 à 7, la direction de chaque roue 4, 5 ou 6 est entièrement hydraulique et indépendante et comporte un jeu de deux biellettes 20 et un vérin hydraulique 23.

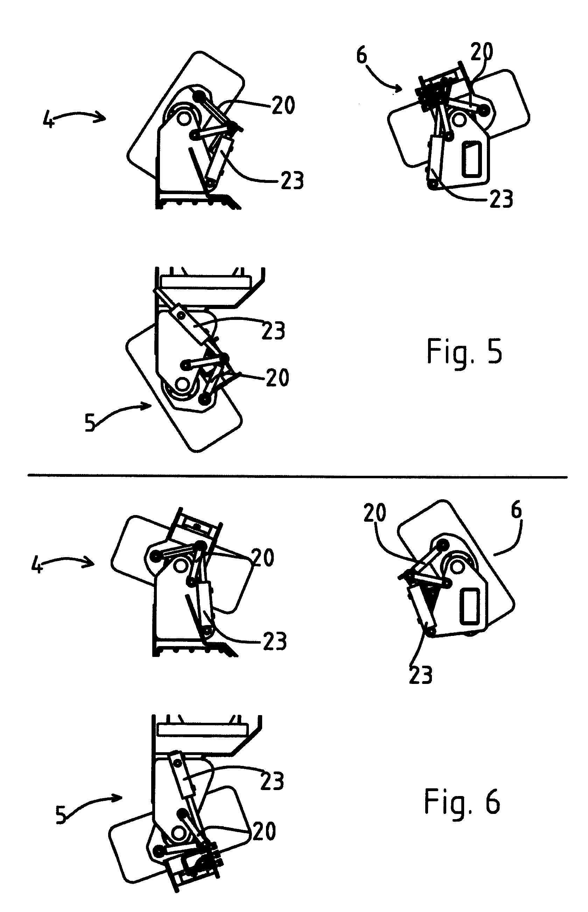

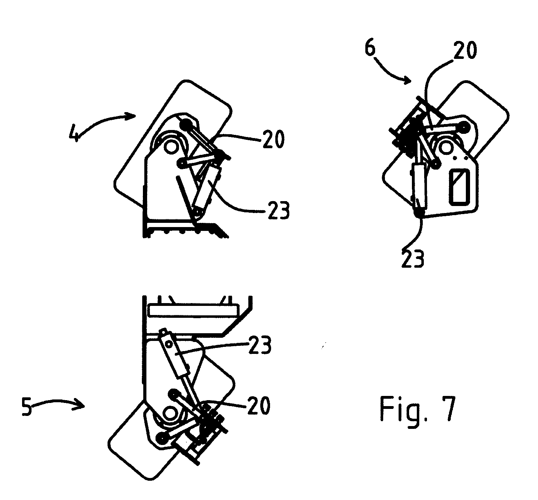

Le porte-outils selon l'invention peut ainsi se déplacer selon trois modes ou programmes de direction différents, soit avec les deux roues avant 4, 6 directrices (figures 3 et 4), soit avec les trois roues 4, 5, 6 directrices (figures 5 et 6), soit encore en mode « crabe » (figure 7), chacun de ces programmes de direction que peut choisir l'opérateur ayant ses avantages propres.

Ainsi, en mode « deux roues directrices », toute modification de la trajectoire est transmise quasi instantanément à l'outil attelé, sans que la stabilité arrière du porte-outils en pâtisse.

Le mode « trois roues directrices » sera sélectionné par exemple lorsque les zones de dégagement pour passer d'un rang de vigne à un autre sont réduites, car le rayon de braquage est alors extrêmement faible, par exemple voisin de l'ordre de 2,75 m à 3,25 m selon la voie.

Enfin, le mode « crabe » permet à l'opérateur de maintenir la trajectoire voulue le long des rangs de vigne alors que la parcelle est en dévers et que le sol est mouillé et glissant, et d'éviter ainsi des dommages importants, notamment la destruction de ceps de vigne que provoquerait le porte-outils en glissant vers et sur eux.

En braquant deux ou trois roues 4, 5, 6, soit à droite, soit à gauche, l'opérateur peut choisir un mode de direction correspondant à la situation concrète qui se présente. L'opérateur peut enclencher ou déclencher à tout moment un des trois modes de direction, tout en évoluant sur un terrain ou une parcelle, l'outil attelé travaillant ou non.

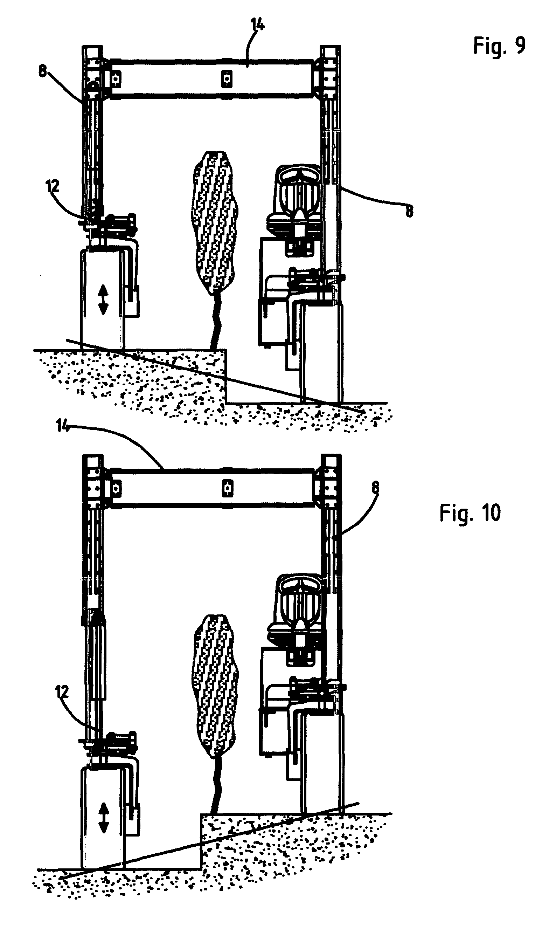

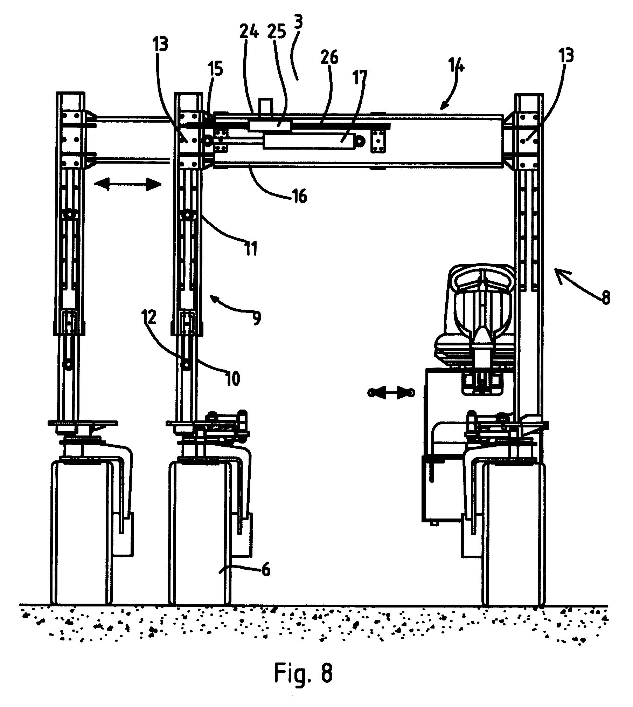

En référence aux figures 8, 9 et 10, la partie avant du porte-outils, c'est-à-dire le portique 3, est adaptable à tout relief de terrain et à tous types de vignes.

D'une part, la poutre 14 comporte deux éléments 15, 16 pouvant coulisser sous l'action d'un vérin hydraulique 17 à double effet, de sorte que la voie est variable entre une voie minimale et une voie maximale, le mât 9 s'élevant au-dessus de la roue 6 pouvant ainsi s'écarter ou se rapprocher du mât 8 sur une distance qui est fonction de la course de la tige du vérin 17. Cette caractéristique permet au porte-outils d'enjamber un ou deux rangs de vigne.

De manière avantageuse, le dispositif de variation de la voie peut être assorti d'un dispositif de centrage automatique de l'outil, de sorte que celui-ci est continuellement maintenu à équidistance des mâts 8, 9.

D'autre part, la poutre 14 est également pourvue d'un dispositif 24 permettant une correction automatique des angles de braquage des roues en fonction de la largeur de la voie. Ce dispositif comprend un système de pignon 25 - crémaillère 26 et un convertisseur électronique déduisant l'écartement, c'est-à-dire la voie à partir de la position angulaire du pignon et du nombre de tours effectués par ce dernier, l'information du convertisseur étant transmise à trois capteurs.

Chaque capteur est associé à une roue et agencé sur la fusée de cette roue, chaque capteur commande une électro-vanne donnant une impulsion hydraulique adéquate agissant sur les vérins 23 de direction.

Le mât 9 comporte, de préférence également deux éléments 10, 11 pouvant coulisser sous l'action d'un vérin hydraulique 12 à double effet abrité dans le mât 9, ce qui permet de corriger l'assiette du porte-outils (figures 9 et 10). Cette correction peut être commandée à l'aide d'un dispositif de mise à niveau, manuellement ou automatiquement. Grâce à cette correction, le centre de gravité n'est pas modifié latéralement, ce qui est un facteur de sécurité.

Le mât 8 et l'élément 10 du mât 9 sont pourvus, sur leur face avant, de plaques 13, afin de pouvoir fixer la poutre 14 à différentes hauteurs par rapport au sol, ce qui permet d'agencer un outil au niveau adéquat en fonction du genre de vignes sur lesquelles il est prévu d'intervenir.

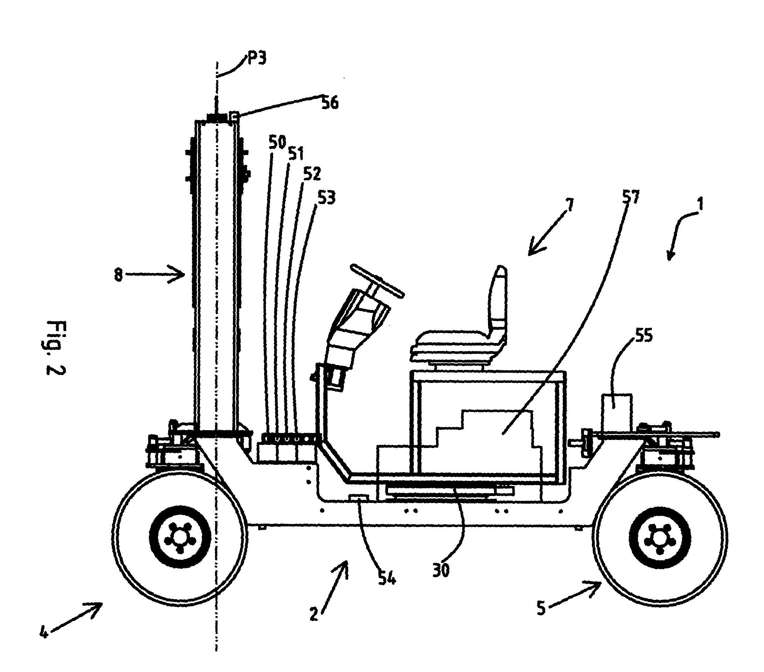

En référence aux figures 2 et 11, le poste de pilotage 7 peut être inversé (figure 11), grâce à une plate-forme tournante 30 (figure 2), afin de déplacer le porte-outils de la même manière dans les deux sens, c'est-à-dire aussi bien dans le sens avant usuel indiqué par la flèche AV de la figure 1 que dans le sens opposé.

L'avantage de cette caractéristique est manifeste lorsque le porte-outils est mis en oeuvre pour effectuer des traitements et autres pulvérisations impliquant l'utilisation de produits chimiques (par exemple un insecticide) : dans ce cas, l'outil de traitement est alors attelé à l'arrière par rapport au sens de marche, tout en restant attelé au portique 3 comme tous les autres outils.

La figure 2 montre l'emplacement possible de différents agrégats, d'autres pouvant s'y ajouter selon le degré d'automatisation souhaité. Sont représentés, notamment : un bloc foré 50 comprenant des électro-distributeurs proportionnels pour la commande des différents outils (par exemple l'alimentation des moteurs d'une prétailleuse) , un distributeur 51 pour l'écartement de la voie du portique 3, un bloc 52 pour la commande du dispositif de direction des roues, un bloc 53 commandant les moteurs hydrostatiques des roues, un dispositif de correction de dévers 54 (par exemple système à pendule) , un boîtier électronique 55 de traitement des paramètres de fonctionnement des différents outils (prétailleuse, rogneuse, épampreuse, etc.) , un dispositif 56 de positionnement global par satellite (appelé généralement GPS) fournissant des informations audit boîtier électronique aux fins d'adapter des paramètres de fonctionnement , un moteur 57 du porte-outils entraînant un groupe hydraulique et des pompes hydrauliques.

## Revendications

1. Porte-outils (1) à trois roues (4, 5, 6) utilisable notamment en viticulture, présentant un poste (7) de pilotage, un châssis (2) et un dispositif de direction, et permettant de porter au moins un outil destiné à être mis en oeuvre pour effectuer au moins un travail défini, **caractérisé en ce que** sa conformation, vue en plan, présente sensiblement la forme de la lettre grecque r : une extrémité du châssis (2) étant reliée à un portique (3) perpendiculaire au châssis (2).

2. Porte-outils selon la revendication 1, **caractérisé en ce que** le portique (3) comporte deux mâts (8, 9), **en ce qu'**une première roue (4) est agencée à la fois à une première extrémité du châssis (2) et à l'extrémité inférieure de l'un (8) des mâts, **en ce qu'**une deuxième roue (5) est agencée à une deuxième extrémité du châssis (2) et **en ce qu'**une troisième roue (6) est agencée à l'extrémité inférieure de l'autre mât (9).

3. Porte-outils selon la revendication 1, **caractérisé en ce que** les trois roues (4, 5, 6) sont motrices.

4. Porte-outils selon la revendication 1, 2 ou 3, **caractérisé en ce que** le dispositif de direction permet de rendre directrices : soit deux roues (4, 6), soit les trois roues (4, 5, 6), soit de mettre les trois roues (4, 5, 6) en position crabe.

5. Porte-outils selon l'une quelconque des revendications 1 à 4, **caractérisé en ce qu'**il comporte un dispositif de correction de dévers.

6. Porte-outils selon l'une des revendications 1 à 5, **caractérisé en ce qu'**il comporte un dispositif de modification de la voie.

7. Porte-outils selon la revendication 6, **caractérisé en ce qu'**il comporte un dispositif de correction automatique des angles de braquage des roues en fonction de la voie.

8. Porte-outils selon la revendication 6 ou 7, **caractérisé en ce qu'**il comporte un dispositif de centrage automatique de l'outil, de manière à maintenir l'outil centré sur le portique.

9. Porte-outils selon l'une des revendications 1 à 8, **caractérisé en ce que** le poste (7) de pilotage est réversible.

10. Porte-outils selon l'une des revendications 1 à 9, **caractérisé en ce que** le porte-outils comporte des moyens pour effectuer au moins un travail défini en évoluant dans le sens opposé au sens habituel, le poste (7) de pilotage circulant en avant du portique (3) pour effectuer ce travail défini.
